(19) Europäisches Patentamt
European Patent Office
Office européen des brevets

(11) EP 4 764 214 A1

(12) EUROPEAN PATENT APPLICATION

(43) Date of publication:
24.06.2026  Bulletin 2026/26

(21) Application number: 25221807.8

(22) Date of filing: 09.12.2025

(51) International Patent Classification (IPC):
F04B 13/00 (2006.01)    F04B 49/06 (2006.01)

(52) Cooperative Patent Classification (CPC):
F04B 49/065; F04B 13/00; F04B 2205/05;
F04B 2205/09; F04B 2205/13

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.12.2024  US 202463736177 P

(71) Applicant: Precision Planting LLC
Tremont, IL 61568 (US)

(72) Inventors:
• Zietz, John Michael
  Fargo (US)
• Vanhoever, Lucas
  Fargo (US)

(74) Representative: AGCO Intellectual Property
Department
AGCO Limited
Abbey Park Stoneleigh
Kenilworth CV8 2TQ (GB)

(54) PREDICTING INTENDED FLOWRATE OF FLUID

(57) A mechanism for determining an intended flow rate of fluid pumped by a pumping arrangement for an agricultural vehicle. A processing system processes a set of parameters to produce the intended flow rate of fluid. The set of parameters comprises a measured pressure of the fluid, a duty cycle of the pumping arrangement and an indicator of a size of an orifice through which the fluid exits the pumping arrangement.

EP 4 764 214 A1

FIG. 3

**Description**

CROSS-REFERENCE TO RELATED APPLICATIONS

N/A.

FIELD

Embodiments of the present disclosure relate to the field of agriculture, and in particular to the prediction of fill levels of agricultural containers.

BACKGROUND

With ever-increasing population numbers and an ongoing interest in more environmentally friendly farming practices, there is a desire to improve agricultural practices. One important feature of agricultural practices is the controlled output of fluid (e.g., liquids), such as fertilizer, pesticides, water and so on. This is useful for controlling the operation of an agricultural sprayer or similar agricultural machine.

There is therefore a need for accurate control over the flowrate of liquid to one or more (output) orifices, such as nozzles. A change in the flowrate of fluid to an orifice will impact the size of droplets output from the orifice and/or the distance to which droplets output from the orifice are dispersed.

One approach to controlling the flowrate of a fluid to the orifice is to provide a flowrate control system having a pumping arrangement, such as a solenoid-based pumping arrangement. By using a pulse width modulation technique to control the operation of the pumping arrangement, the flowrate of the fluid can be more precisely controlled.

There is an ongoing desire to make information about the operation of an agricultural machine available to different (sub-)systems of the agricultural machine.

BRIEF SUMMARY

According to examples in accordance with this disclosure, there is provided a system for predicting an intended flowrate of a flow of fluid pumped by a pumping arrangement through an orifice. In accordance with a proposed approach, there is provided a system comprising: a pressure sensor configured to measure a pressure of the flow of fluid to produce a measured pressure; a duty cycle measurement system configured to measure a duty cycle of the pumping arrangement when producing the flow of fluid to produce a measured duty cycle; an input interface configured to receive an orifice size indicator indicating a size of the orifice; and a processing arrangement configured to process the measured pressure, the measured duty cycle and the orifice size indicator to predict the intended flowrate of the flow of fluid.

The present disclosure proposes an approach for estimating or approximating an intended flow rate for fluid pumped by a pumping arrangement. In particular, the proposed approach provides an independent mechanism for estimating the intended flow rate without a need to communicate with a controller of the pumping arrangement. This provides a useful crosscheck of an intended flow rate, and is able to help or aid in the identification of errors in the control of fluid pumping.

It has been herein recognized that an intended flowrate (i.e., of a controller of the pumping arrangement) is derivable from measures of: fluid pressure, duty cycle (of the pumping arrangement) and orifice size. The proposed approach thereby facilitates independent identification of the intended flowrate.

In some embodiments, the processing arrangement is configured to: process the measured pressure and the orifice size indicator to produce an initial estimate of flowrate through the orifice; and process the initial estimate of flowrate and the measured duty cycle to predict the intended flowrate of the flow of fluid. This approach provides an initial baseline for an intended flowrate, which is adjusted or corrected using the duty cycle, to thereby provide an accurate measure of the intended flowrate.

In some embodiments, the measured duty cycle is a value between 0 and 1, and the processing arrangement is configured to multiply the initial estimate of flowrate by the measured duty cycle to predict the intended flowrate of the flow of fluid. This approach provides a straightforward way to adjust the flowrate estimate based on the duty cycle. It allows for easy implementation and quick calculations, facilitating real-time flowrate predictions in dynamic systems.

In some embodiments, the orifice size indicator is an area of the orifice. Using the area of the orifice as the size indicator provides a direct and precise measure for flowrate calculations. This is under the assumption that the pressure between the orifice and the pressure sensor it substantially constant or in steady state.

In some embodiments, the orifice size indicator is user-defined. In some embodiments, the input interface comprises a user input interface configured to produce the orifice size indicator responsive to an interaction with the user input interface by a user. The user input interface for orifice size allows for easy user adjustment and configuration of the proposed approach.

In some embodiments, the duty cycle measurement system comprises a pressure sensing arrangement configured to measure pressure variations, associated with operation of the pumping arrangement, in the flow of fluid to measure the duty cycle. Using pressure variations to measure facilitates accurate and high resolution generation of duty cycle data.

In some embodiments, the duty cycle measurement system comprises a magnetometer configured to measure magnetic field variations associated with an operation of the pumping arrangement to measure the duty cycle. Using a magnetometer for duty cycle measurement provides a non-invasive method to monitor pump operation. This approach allows for accurate duty cycle determination with reduced risk of interfere with the fluid flow or requiring modifications to an existing pumping assembly, enhancing reliability and ease of installation.

In some embodiments, the duty cycle measurement system comprises an accelerometer configured to measure vibrations and/or motion associated with an operation of the pumping arrangement to measure the duty cycle. This provides an alternative mechanism for measuring a duty cycle that does not require direct interaction with fluid flow, thereby providing another non-invasive mechanism for assessing duty cycle.

In some embodiments, the system further comprises: a flowrate system configured to measure a flowrate of the fluid through the orifice, to produce a measured flowrate, wherein the processing arrangement is configured to compare the predicted intended flowrate to the measured flowrate to produce difference information indicative of a difference between the predicted intended flowrate and the measured flowrate. The addition of a flowrate measurement system enables real-time comparisons between an intended flowrate and the true flowrate, e.g., for identification of potential issues in the pumping assembly.

In some embodiments, the processing arrangement is configured to generate and output an alert output signal responsive to the difference information. The alert output feature provides immediate notification of discrepancies between intended and actual flowrates.

In some embodiments, the processing arrangement is further configured to control a user interface to provide a user-perceptible output responsive to the alert output signal. This reduces a risk that operator relevant alerts are not overlooked.

In some embodiments, the processing arrangement is configured to control a user interface to provide a user-perceptible output responsive to the intended flowrate, e.g., provide a user-perceptible output representing the intended flowrate.

In some embodiments, the orifice is a nozzle.

In accordance with another proposed approach, there is provided a computer-implemented method for predicting an intended flowrate of a flow of fluid pumped by a pumping arrangement through an orifice. The method comprises: measuring, using a pressure sensor positioned between the pumping arrangement and the orifice, a pressure applied by the flow of fluid to produce a measured pressure; measuring, using a duty cycle measurement system, a duty cycle of the pumping arrangement when producing the flow of fluid to produce a measured duty cycle; receiving, via an input interface, an orifice size indicator indicating a size of the orifice; and processing the measured pressure, the measured duty cycle and the orifice size indicator to predict the intended flowrate of the flow of fluid.

In some embodiments, the method comprises: processing the measured pressure and the orifice size indicator to produce an initial estimate of flowrate through the orifice; and processing the initial estimate of flowrate and the measured duty cycle to predict the intended flowrate of the flow of fluid.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

BRIEF DESCRIPTION OF THE DRAWINGS

One or more embodiments of the disclosure will now be described, by way of example only, with reference to the accompanying drawings, in which:

FIG. 1 illustrates an agricultural machine.
FIG. 2 illustrates a boom arm for the agricultural machine.
FIG. 3 illustrates a pumping assembly.
FIG. 4 illustrates a proposed system.
FIG. 5 illustrates another pumping assembly.

FIG. 6 is a flowchart illustrating a proposed method.

DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

The present disclosure provides a mechanism for determining an intended flow rate of fluid pumped by a pumping arrangement for an agricultural vehicle. A processing system processes a set of parameters to produce the intended flow rate of fluid. The set of parameters comprises a measured pressure of the fluid, a duty cycle of the pumping arrangement and an indicator of a size of an orifice through which the fluid exits the pumping arrangement.

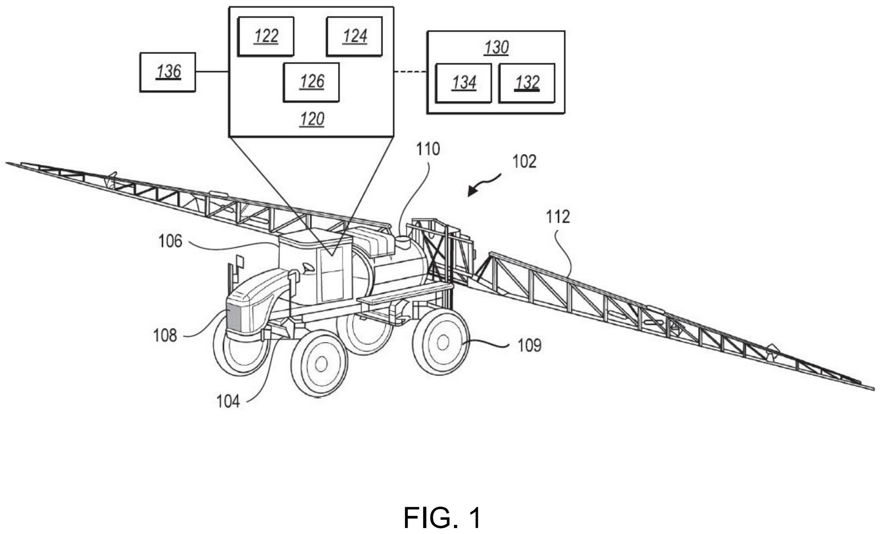

FIG. 1 illustrates an agricultural machine 102 in which proposed embodiments may be employed, for the purposes of improved contextual understanding.

The agricultural machine 102 comprises one or more pumping assemblies (not visible in FIG. 1). Each pumping assembly is configured to produce a flow of fluid, which fluid exits an orifice of the pumping assembly (e.g., defined by a nozzle). This facilitates dispersal or spraying of the flow of fluid over an agricultural region or field.

The fluid may, for instance, be an agricultural fluid such as chemicals and/or water. By way of example, the fluid may include chemicals, such as but not limited to, herbicides, pesticides, fungicides, and/or fertilizers.

In the illustrated example, the agricultural machine is a crop sprayer 102, designed for delivering chemicals and/or other agricultural material (such as fertilizer or water) to agricultural crops in an agricultural field (also referred to herein as a "field").

The crop sprayer 102 includes a chassis 104 supported by wheels 109 or a track. The crop sprayer 102 may include an operator cab 106 mounted on the chassis 104. The operator cab 106 may house controls for the crop sprayer 102. An engine 108 may be mounted on a forward portion of the chassis 104 in front of the operator cab 106 or may be mounted on a rearward portion of the chassis 104 behind the operator cab 106. The engine 108 may, for example, comprise a diesel engine or a gasoline-powered internal combustion engine, a batterypowered electric motor, etc. The engine 108 provides energy to propel the crop sprayer 102 through a field on wheels 109 or tracks, and may also provide energy to spray fluids (e.g., liquids, gases) from the crop sprayer 102.

The crop sprayer 102 further includes a product tank 110 to store the fluid (e.g., a liquid, a gas) to be sprayed on the field, which fluid is also known as product. The product tank 110 may be mounted on the chassis 104, either in front of or behind the operator cab 106. The crop sprayer 102 may include more than one product tank 110 to store different chemicals to be sprayed on the field. The stored chemicals may be dispersed by the crop sprayer 102 one at a time, or different chemicals may be mixed and dispersed together in a variety of mixtures. The product tank 110 may be a liquid tank (generally at atmospheric pressure) or a pressurized gas tank.

A boom 112 on the crop sprayer 102 is used to distribute the fluid from the product tank 110 over a wide swath as the crop sprayer 102 is driven through the field. The boom 112 may include two or more portions that can fold for transport on public roadways, and unfold (i.e., to the position shown in FIG. 1) for field operations.

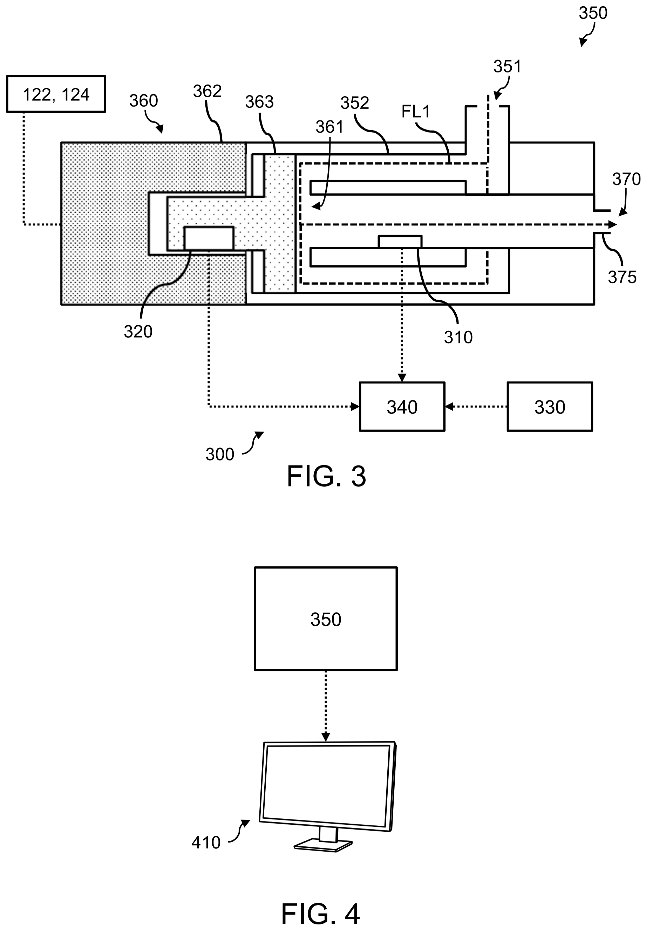

In particular, as later illustrated (FIG. 3) and described, the boom 112 may carry one or more pumping assemblies for pumping the fluid out of respective one or more orifices.

The crop sprayer 102 includes a control system 120 (also referred to as a "central controller") configured to facilitate one or more control operations of the crop sprayer 102, e.g., the operation of each pumping assembly. In particular, the control system 120 may be configured to control spray operations of the crop sprayer 102, such as an application rate of product to be applied to crops and/or a field.

More specifically, the control system 120 may comprise a pumping assembly controller 122, 124 configured to control the operation of one or more pumping assemblies, as later exemplified and described. In general terms, the pumping assembly controller 122, 124 is able to control the pumping assembly/assemblies to pump fluid from the product tank and out of one or more nozzles/orifices to spray the fluid. The pumping assembly controller 122, 124 is thereby able to control the flowrate of fluid within the pumping assembly/assemblies, and thereby the application rate of product.

The pumping assembly controller 122, 124 may comprise a controller 122 (which provides the signals to the one or more pumping assemblies) and one or more control processors 124 (which defines the properties of the signals provided by the controller 122).

The control system 120 may further includes an input/output (I/O) device 126. The control system 120 may include one or more additional controllers for operating the crop sprayer 102, such as a controller for steering of the crop sprayer 102, a controller for adjusting the height of the chassis 104, and/or other controllers.

In addition, a sensor monitoring system 130 (also referred to as a "monitoring system 130," "a measurement system 130," or a "sensor management system 130") may be in operable communication with the control system 120. The sensor monitoring system 130 include, for example, a computing system 132 and an I/O device 134.

As later exemplified, the computing system 132 may be configured to communicate with one or more sensor arrangements configured to generate sensor information for one or more other elements of the agricultural vehicle.

In some embodiments, the sensor monitoring system 130 is in operable communication with the control system 120, such as by wireless or wired communication. In some embodiments, the sensor monitoring system 130 being separate from the control system 120 facilitates modification of an existing crop sprayer 102 including the control system 120 with the sensor monitoring system 130. In some embodiments, each of the control system 120 and the sensor monitoring system 130 is located in the operator cab 106.

In some embodiments, the sensor monitoring system 130 comprises a different device (e.g., a computing device) than the control system 120. In other examples, the sensor monitoring system 130 and the control system 120 form different modules or components of a same shared device (e.g., a same shared computing device).

Some further optional features of the agricultural vehicle are hereafter described for the sake of completeness.

The crop sprayer 102 may further include a global positioning system ("GPS") receiver 136 mounted to the crop sprayer 102 and operably connected to (e.g., in communication with) the control system 120. The GPS receiver 136 may provide GPS data to the control system 120, such as during traversal of the crop sprayer 102 in a forward direction and during application of product through pumping assemblies to determine an application rate of the product.

The I/O device 122 and/or the I/O device 134 may be configured to display information to an operator of the crop sprayer 102. For example, the I/O device 122 may include a user interface through which the operator activates steering control of the crop sprayer 102, control of the boom 112, or control of pumping assemblies, as described in further detail herein. The I/O device 134 may be configured to display information related to the pumping assemblies to the operator of the crop sprayer 102. The I/O device 126 and/or the I/O 11 device 134 may (e.g., each) include a graphical user interface (GUI) configured to display one or more operating conditions of the respective crop sprayer 102, the pumping assemblies, and/or the sensor arrangement(s) to an operator of the crop sprayer 102.

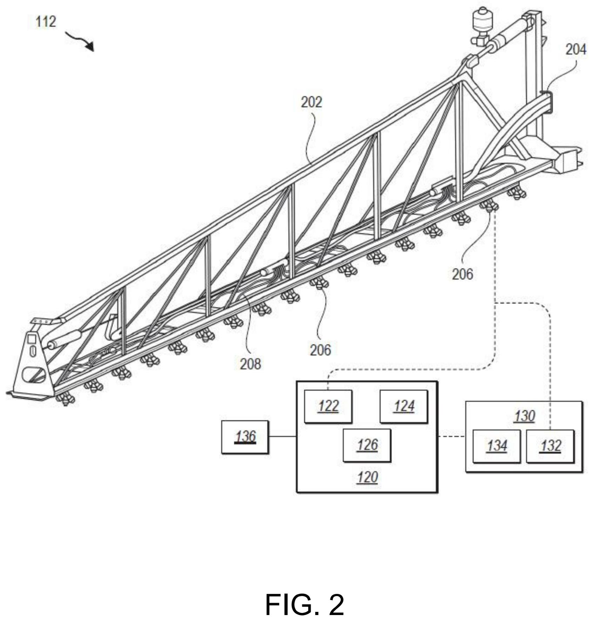

FIG. 2 is a simplified perspective view of a portion of a boom arm 202 of the boom 112.

Fluid is conveyed from the product tank 110 (FIG. 1) by a fluid distribution system 204 to fluid outlet lines 208, each in fluid communication with a respective pumping assembly 206 spaced along the boom 112. The fluid distribution system 204, which may be mounted on the boom arm 202, may comprise at least one supply line and a recirculation line connected to the product tank 110 (FIG. 1).

Each pumping assembly 206 may be substantially similar to the spray nozzles described in U.S. Patent Application 2022/0264865, "Hydraulic Spray Nozzle," published August 25, 2022, or in International Patent Publication WO 2021/067739 A2, "Parameter Sensing for a Liquid Applicator," published April 8, 2021. Some further example pumping assemblies, which may embody each pumping assembly 206, are described later in this disclosure.

For improved contextual understanding, in FIG. 2, one of the pumping assemblies 206 is shown in operable communication with each of the control system 120 and the sensor monitoring system 130. For example, the pumping assembly 206 may be in operable communication with the computing system 126 of the control system 120 and the computing system 132 of the sensor monitoring system 130.

In some embodiments, a sensing arrangement of the pumping assembly 206 is in operable communication with the sensor monitoring system 130 for communicating with one or more sensors of the pumping assembly.

While only one of the pumping assemblies 206 is shown in operable communication with the control system 120 and the sensor monitoring system 130, it will be understood that, in practice, each of the pumping assemblies 206 may be in operable communication with the sensor monitoring system 130.

The skilled person will readily appreciate that other forms of agricultural machines may carry or comprise one or more pumping assemblies for producing a respective flow of fluid, which fluid exits an orifice of the pumping assembly.

FIG. 3 is a simplified illustration of a pumping assembly 350 comprising a proposed system 300 for the sake of improved contextual understanding.

The pumping assembly 350 comprises a pumping arrangement 360 that is configured to produce, via pumping, a flow of fluid FL1 that exits through an orifice 370 (i.e., an outlet or aperture).

The pumping assembly 350 comprises an inlet 351 for receiving fluid from a fluid reservoir, such as the product tank 110 (FIG. 1) - e.g., via one or more fluid outlet lines. The pumping assembly 350 fluidly connects the inlet 351 to the orifice 370 via one or more fluid channels 352 (e.g., pipes or ducts). The pumping arrangement 360 is positioned to control the flow of fluid through the one or more channels, to thereby control the flow of fluid FL1 that exits through the orifice.

In the illustrated example, the pumping arrangement 360 defines a valve 361 positioned within the fluid channels (e.g., connected two fluid channels together). More particularly, the pumping arrangement 360 comprises an actuator 362 and a valve member 363. The actuator is configured to drive reciprocation of the valve member to open and close the valve, to thereby drive fluidic flow through the fluid channels 352. In some embodiments, the actuator 362 comprises a solenoid.

More particularly, upon actuation, the actuator causes the valve member 363 to open or close a flow pathway through the valve 361. By controlling the duty cycle of the actuator (and therefore the duty cycle of the reciprocation of the valve member 363 and the corresponding opening and closing of the valve), the actuator 362 is able to control one or more properties of the flow of fluid FL1 through the orifice.

The pumping arrangement 360 may be controlled by a pumping assembly controller, such as the pumping assembly controller 122, 124 (FIG. 1). Thus, the pumping assembly controller is configured to control the operation of the actuator, to thereby control the flowrate of the flow of fluid through the pumping assembly.

In particular, the pumping assembly controller controls the pumping arrangement using a pulse width modulation approach or technique. The pumping assembly controller is configured to control at least a duty cycle (and optionally a frequency) of the pumping arrangement 360 so as to control at least a flowrate of the fluid.

It will be appreciated how the duty cycle of the pumping arrangement is able to directly influence the flowrate of fluid. In particular, as the duty cycle increases, more fluid is able to flow through the pumping arrangement for each cycle of the pumping arrangement's operation, thereby increasing the flowrate. Similarly, as the duty cycle decreases, less fluid is able to flow through the pumping arrangement for each cycle of the pumping arrangement's operation, thereby reducing the flowrate.

The pumping assembly controller 122, 124 may be configured to control the operation of the pumping arrangement 360 using sensor data representing one or more sensed parameters of the flow of fluid FL1. The sensor data may be produced by one or more sensing arrangements (e.g., flowrate sensors, pressure sensors) and passed to the pumping assembly controller via the sensor monitoring system 130). In this way, the pumping assembly controller 122, 124 may operate using feedback from the one or more sensed parameters, i.e., functions as a closed-loop controller.

However, this is not essential. In other examples, the pumping assembly controller 122, 124 functions as an open-loop controller.

The orifice 370 is an output orifice for fluid to exit the pumping assembly 350. In some examples, the orifice 370 is an orifice of a nozzle 375, which functions to atomize the fluid flowing through the orifice to produce a fluidic spray out of the pumping assembly 350. The nozzle 375 may be interchangeable with other nozzles, to thereby modify the size and/or shape of the orifice 370 and thereby achieve different spray patterns.

The proposed system 300 is designed for predicting an intended flowrate of a flow of fluid FL1 pumped by the pumping arrangement 360 through the orifice 370.

As used herein, the term "intended flowrate" refers to the desired or target rate at which fluid is intended to flow through an orifice or nozzle of a pumping assembly. The intended flowrate is set or defined by the pumping assembly controller.

The present disclosure recognizes the usefulness of having an independent monitoring system capable of determining the intended target flowrate set by the pumping assembly controller. This independent monitoring may, for instance, provide a cross-checking mechanism against the actual system performance to aid in the identification of errors, discrepancies and/or malfunctions.

The present disclosure also recognizes that systems for controlling flowrate may be compartmentalized or isolated from other components of the agricultural machine. In such cases, the pumping assembly controller may be unable to directly communicate with other systems or modules, limiting the ability to share important operational data. This compartmentalization can occur due to various factors, such as proprietary systems (e.g., using proprietary or difficult to interpret communication protocols/techniques), legacy equipment integration, or intentional design choices to maintain system independence.

The present disclosure thereby aims to provide a system that is able to independently predict or monitor an intended flowrate, which is able to work alongside existing or independent pumping assembly controllers. In particular, the calculated intended flowrate is a flowrate produced assuming a "perfect" orifice (e.g., an orifice that is not blocked or worn (e.g., takes an intended or desired shape)) and/or outlet piping for the pumping arrangement. A change in a size of an orifice may not significantly affect pressure measurements, but is more likely to influence a flow rate. Thus the proposed system facilitates the measuring of flow rate would be assuming a perfect orifice. In some instances, a dedicated flow monitor can then be used to confirm this flowrate is correct, relative to what was intended, e.g., and alert accordingly.

The proposed system 300 comprises a pressure sensor 310; a duty cycle measurement system 320; an input interface 330; and a processing arrangement 340.

In particular, the calculated intended flowrate is a flowrate produced assuming a "perfect" orifice (e.g., an orifice that is not blocked or worn (e.g., takes an intended or desired shape)) and/or outlet piping for the pumping arrangement. A change in a size of an orifice may not significantly affect pressure measurements, but is more likely to influence a flow rate. Thus the proposed system facilitates the measuring of flow rate would be assuming a perfect orifice. In some instances, a dedicated flow monitor can then be used to confirm this flowrate is correct, relative to what was intended, e.g., and alert accordingly.

Thus, the intended flowrate represents an expected flowrate that is intended by the pumping assembly controller for known properties of the pumping arrangement.

The proposed system 300 comprises a pressure sensor 310; a duty cycle measurement system 320; an input interface 330; and a processing arrangement 340.

The pressure sensor 310 is configured to measure a pressure of the flow of fluid to produce a measured pressure. In particular, the pressure sensor 310 may measure a steady state or average pressure of the flow of fluid to produce the measured pressure.

The pressure sensor may, for instance, comprise a pressure port at which a diaphragm is located. The diaphragm may be exposed to the fluid in the pumping assembly 350, such as the fluid of the flow of fluid FL1. The pressure sensor includes a sensor component, which may include a piezoresistive or a piezoelectric component. Interaction of the diaphragm on the sensor component may be indicative of and correspond to a pressure of the pressure of the flow of fluid.

However, other examples of suitable pressure sensors are well known to the skilled person.

The pressure sensor 310 may be placed in the flow of fluid before said fluid reaches the pumping arrangement 360 (i.e., upstream of the pumping arrangement) or (as illustrated) after said fluid has passed through the pumping arrangement (i.e., downstream of the pumping arrangement).

In some examples, the pressure sensor 310 may comprise separate pressure sensing elements, one positioned upstream and one positioned downstream of the pumping arrangement. The pressure measured by each pressure sensing element may be averaged to produce the measure of pressure.

The measure of pressure may be an average measure of pressure, e.g., averaged between transitions of the pumping arrangement. In other words, the measure of pressure may be a steady state pressure of the flow of fluid.

The duty cycle measurement system 320 is configured to measure a duty cycle of the pumping arrangement, when producing the flow of fluid, to produce a measured duty cycle.

The duty cycle measurement system 320 may comprise a duty cycle sensor configured to generate raw duty cycle data indicative of a duty cycle. The duty cycle measurement system may further comprise a processing module (which, in practice, may form part of the processing arrangement 340) that processes the raw duty cycle data to produce the measured duty cycle.

In some embodiments, the duty cycle measurement system comprises a pressure sensing arrangement (an example of a duty cycle sensor) configured to measure pressure variations, associated with operation of the pumping arrangement, and more specifically an opening and closing of the valve, in the flow of fluid to measure the duty cycle. The

EP 4 764 214 A1

pressure sensing arrangement may be formed from the pressure sensor 310. To measure the duty cycle from the pressure variations, the duty cycle measurement system may analyze pressure data produced by the pressure sensing arrangement over time.

In particular, as the pumping arrangement operates, it will create cyclical pressure fluctuations in the fluid flow, e.g., corresponding to the opening and closing of the valve in the pumping arrangement. The duty cycle measurement system (e.g., the processing module thereof) may identify peaks and troughs in the pressure data, which may indicate when the valve is open (allowing fluid flow) and closed (restricting fluid flow). By measuring the time duration between these peaks and troughs, the system may determine the on-time and off-time of each cycle and thereby the duty cycle.

The duty cycle measurement system may identify peaks and troughs in the pressure data, which may indicate when the valve is open (allowing fluid flow) and closed (restricting fluid flow). By measuring the time duration between these peaks and troughs, the system may determine the on-time and off-time of each cycle, and therefore the duty cycle.

In a variant approach, it is appreciated that the opening and closing of the valve in the pumping arrangement causes a disruption in the pressure of the flow of fluid. In particular, the shape of the pressure (in a time-varying signal) will indicate when an opening or closing of the valve occurs. The shape of any such disruption will be different for an opening of the pumping valve, compared to a closing of the valve, allowing for discrimination between an opening and a closing.

The duty cycle measurement system may be configured to identify disruptions in the pressure data, which indicate openings or closings of the valve. By measuring the time duration between these disruptions, the system may determine the on-time and off-time of each cycle (and therefore the overall duty cycle).

By way of example only, the duty cycle measurement system may comprise a magnetometer (an example of a duty cycle sensor) configured to measure magnetic field variations associated with an operation of the pumping arrangement, and more specifically an opening and closing of the valve, to measure the duty cycle.

For instance, where the pumping arrangement comprises an actuator that moves a valve member, the magnetometer may be positioned in proximity to the actuator of the pumping arrangement. As the actuator operates to open and close the valve by movement of the pumping arrangement, it generates magnetic field fluctuations that correspond to its duty cycle. This generation of magnetic field fluctuations is particularly apparent when the actuator comprises a solenoid. The magnetometer detects these magnetic field variations to produce a monitoring signal, which may be analysed to determine the timing and duration of the valve's open and closed states and thereby the duty cycle of the pumping arrangement.

As another example, the duty cycle measurement system may comprise an accelerometer (an example of a duty cycle sensor) configured to measure vibrations and/or motion associated with an operation of the pumping arrangement, and more specifically an opening and closing of the valve, to measure the duty cycle.

For instance, the accelerometer may be positioned on or near the pumping arrangement to detect vibrations or motion associated with its operation. As the pumping arrangement cycles between open and closed states, it generates identifiable vibrations or movements that correspond to its duty cycle. The accelerometer detects these vibrations or motions to produce a monitoring signal, which may be analyzed to determine the timing and duration of the valve's open and closed states, thereby measuring the duty cycle of the pumping arrangement.

The duty cycle measurement system may comprise multiple duty cycle sensors, such as those exemplified above, whose output results are averaged to provide a more robust and accurate measurement of the duty cycle. This approach may enhance the reliability and precision of the duty cycle determination. In some cases, the system may apply weighted averaging, where measurements from certain sensors are given more importance based on their reliability or accuracy in specific operating conditions. The weighting factors may be predetermined or dynamically adjusted based on operating parameters.

The input interface 330 is configured to receive an orifice size indicator, indicating a size of the orifice. Thus, the orifice size indicator either provides a value directly representing the size of the orifice or is processable to derive the size of the orifice.

In this context, a size of an orifice is a measurable dimension of the orifice, such as a diameter of the orifice or a cross-sectional surface area of the orifice. Thus, an orifice size may be expressed in various units of measurement, such as millimeters for diameter or square millimeters for area.

The orifice size indicator may therefore take a numeric, categorical or other data format (e.g., a text format). For instance, the orifice size indicator may have a numeric value, explicitly indicating the orifice size. Alternatively, the orifice size indicator may take a categorical or textual value which corresponds or is mappable to a corresponding numeric value or measure of orifice size (e.g., using a lookup table or the like), as later explained.

The orifice size indicator may be user-defined.

Accordingly, the input interface 330 may comprise a user input interface, in which a user is able to manually provide the orifice size indicator. In other words, the user input interface may be configured to produce the orifice size indicator responsive to an interaction with the user input interface by a user.

In some examples, the user input interface may be configured to permit a user to input a numeric value representing the orifice size. In some examples, the user input interface may provide a choice of nozzles with different orifice sizes for selection by a user. Of course, the user input interface may also combine these approaches, allowing users to either select from predefined nozzle options or manually enter custom orifice sizes.

The input interface 330 may be an electronic interface configured to receive data from a nozzle connector device indicating a size of the orifice.

For instance, in some examples, the nozzle 375 may be interchangeable, allowing different nozzles with different orifice sizes to be installed on the pumping assembly 350. The nozzle connector device may be a smart connector or electronic identification system integrated into the nozzle or its mounting mechanism. When a nozzle is installed, this device automatically communicates information about the currently installed nozzle to the input interface 330.

The processing arrangement 340 is configured to process the measured pressure, the measured duty cycle and the orifice size indicator to predict the intended flowrate of the flow of fluid.

The present disclosure recognizes that there is a relationship between an intended flowrate of the flow of fluid (i.e., the flowrate intended by the pumping assembly controller) and the parameters identified above (namely: fluid pressure, pumping arrangement duty cycle and orifice size).

The processing arrangement may, for instance, estimate the intended flowrate of the flow of fluid by first processing the measured pressure and the orifice size indicator to produce an initial estimate of flowrate through the orifice, and then processing the initial estimate of flowrate and the measured duty cycle to predict the intended flowrate of the flow of fluid.

Equation (1) demonstrates a simple approach to estimating the initial flowrate ($q_{initial}$) of the flow of fluid. In this context, the initial flowrate ($q_{initial}$) may represent a predicted mass flowrate or volume flowrate:

$$q_{initial} = C_d . A . \sqrt{2 \Delta p \rho_1} \qquad (1)$$

where $C_d$ is a coefficient (represented or derivable using a discharge coefficient), A is the cross-sectional area of the orifice (indicated by the orifice size indicator), $\Delta p$ is the pressure difference across the orifice and $\rho_1$ is the fluid density of the fluid.

In some simplified examples, a typical or estimated value for the coefficient $C_d$ may be used (e.g., a value of around 0.6-0.7). This provides a good initial estimate of the intended flowrate, without requiring complex calculations.

In improved examples, the value of the coefficient $C_d$ may be defined using the principles set out in the international standard: ISO 5167-2:2003(E) or ISO 5167-2:2022(E), i.e., using the following equation (2):

$$C_d = \frac{C}{\sqrt{1 - \beta^4}} \varepsilon \qquad (2)$$

where C is the discharge coefficient, $\beta$ is the diameter ratio and $\varepsilon$ is the expansibility factor. As explained at least ISO 5167-2:2003(E), the coefficient of discharge C is derivable using the Reader-Harris/Gallagher (1998) equation, the diameter ratio is the ratio of the diameter d of the orifice (derivable from the orifice size indicator. to the diameter D of the pipe in which the orifice is located (which is fixed and known), the expansibility factor is also derivable using known approaches.

The Reader-Harris/Gallagher (1998) equation is defined in READER-HARRIS, M.J. and SATTARY, J.A. The orifice plate discharge coefficient equation - the equation for ISO 5167-1. In Proc. of 14th North Sea Flow Measurement Workshop, Peebles, Scotland, East Kilbride, Glasgow, National Engineering Laboratory, October 1996, p. 24.

Known approaches for determining the expansibility factor are demonstrated in at least ISO 5167-2:2003(E) and READER-HARRIS, M.J. The equation for the expansibility factor for orifice plates. In Proc. of FLOMEKO 98, Lund, Sweden, June 1998, pp. 209-214.

The pressure difference across the orifice $\Delta p$ can be readily determined from the measured pressure and assuming that the pressure outside of the orifice is atmospheric pressure (i.e., 1).

Where equation (2) is used to define the value of the coefficient $C_d$, it will be appreciated that the initial flowrate $q_{initial}$ represents a predicted mass flowrate. To instead cause the initial flowrate to represent the predicted flowrate, the value of the coefficient derived using equation (2) should be divided by $\rho_1$.

From the foregoing, it will be clear that the processing arrangement may use a measure of the orifice size (e.g., diameter and/or area) in the determination of the initial flowrate. Approaches for converting a diameter d of an orifice to an area A of an orifice are trivially known to the skilled person, using the principle:

$$A = \frac{\pi}{4} d^2 \qquad (3)$$

Thus, where the indicator of orifice size does not directly represent the measure of orifice size, the processing arrangement may process the indicator of orifice size to generate the measure of orifice size.

This may, for instance, be performed using a lookup table to map the (e.g., categorical or textual) indicator of orifice size to a corresponding measure of orifice size. For example, the lookup table may associate specific nozzle model numbers or descriptive categories (e.g., "fine", "medium", "coarse") with their corresponding orifice diameters or areas.

As previously mentioned, the processing arrangement is also configured to process the initial estimate of flowrate and the measured duty cycle to predict the intended flowrate of the flow of fluid.

In a simple example, assuming the duty cycle DC is represented or representable as a fraction or ratio (having a range of from 0 to 1), the processing arrangement may use equation (4) to predict the intended flowrate $q_{intended}$ of the fluid:

$$q_{intended} = DC. q_{initial} \qquad (4)$$

Thus, the measured duty cycle may take a value of between 0 and 1, and the processing arrangement may be configured to multiply the initial estimate of flowrate by the measured duty cycle to predict the intended flowrate of the flow of fluid.

In a more complex example, the initial flowrate may be modified based on previously captured data to produce the intended flowrate.

For instance, calibration may be performed to produce previously captured data for achieving better generation of the intended flow rate from the initial flow rate and the measured duty cycle. The calibration process may involve collecting and analyzing data from the system under various controlled conditions to establish relationships between measured parameters and actual flow rates.

Such a calibration procedure may comprise, for instance, running the pumping arrangement for different known duty cycle, while measuring the corresponding initial flow rate and the actual flow rate. Measuring the actual flow rate may be performed using a high-precision flow meter or a so-called bucket test, in which the volume of fluid pumped by the pumping arrangement for a set period of time fluid is measured (e.g., captured in a bucket or other container) and used to derive the actual flow rate. Such a calibration procedure generates a set of data points correlating combinations of initial flow rates and duty cycle to actual flow rates.

This calibration data can be used to create a lookup table or to develop a mathematical model (e.g., a polynomial regression or machine learning model) that maps the initial flowrate estimate and duty cycle to a more accurate prediction of the intended flowrate. The processing arrangement can then use this model or lookup table when processing the initial estimate of flowrate and the measured duty cycle to predict the intended flowrate of the flow of fluid.

For example, the processing arrangement may first calculate the initial estimate of flowrate using equation (1). Then, instead of simply multiplying this initial estimate by the duty cycle (as demonstrated by equation (4)), it could input both the initial estimate and the duty cycle into the calibrated model or lookup table to obtain a more accurate prediction of the intended flowrate.

FIG. 4 conceptually illustrates components of a proposed system 350, together with additional optional components for the system 350.

As previously mentioned, the proposed system 350 comprises a pressure sensor 310; a duty cycle measurement system 320; an input interface 330; and a processing arrangement 340.

The system 350 may further comprise an output interface 410 for providing one or more user-perceptible outputs responsive to the intended flowrate of the fluid determined by the processing arrangement. The operation of the output interface 410 may be (at least partially) controlled by the processing arrangement 340.

In some cases, the output interface 410 may be integrated into the operator cab 106 of the agricultural machine 102 (FIG. 1), providing easy access for the operator. As another example, the output interface 410 may form part of a separate, portable device (e.g., a mobile device via a mobile application) that can be carried by the operator.

The output interface 340 may, for instance, be at least partly formed in I/O device 122 and/or the I/O device 134 (FIG. 1). Thus, the I/O device 122 and/or the I/O device 134 (FIG. 1) may comprise the output interface 340.

In some examples, the processing arrangement 340 is configured to control the output interface 410 to provide a user-perceptible output of the intended flowrate. By way of example, the output interface 410 may comprise a screen or display, and the processing arrangement 340 may be configured to control the screen/display of the output interface 410 to provide a visual representation of the intended flowrate of the fluid. As another example, the output interface may comprise a speaker, and the processing arrangement 340 may be configured to control the speaker to provide an audio representation of the intended flowrate of the fluid.

The system 350 may further a flowrate system configured to measure a flowrate of the fluid through the orifice, to produce a measured flowrate.

In practice, the flowrate system may comprise a flowrate sensor (also known as a flow meter) positioned within the flow of fluid in the pressure assembly, e.g., upstream or downstream of the pumping arrangement. The flowrate sensor is configured to generate the measured flowrate by measuring or monitoring the flowrate of the fluid.

Exemplary flowrate sensors or flow meters are known in the art, such as those described in International Patent Publication WO 2021/067739 A2, "Parameter Sensing for a Liquid Applicator," published April 8, 2021 or U.S. Patent Application Publication 2023/0025158, "Spray Flow Sensing with Optical Signature Analysis," published July 12, 2023.

One example of a flowrate sensor is hereafter described.

The exemplary flowrate sensor may comprise a projectile disposed the flow of fluid. Responsive to fluid flow, the projectile rotates about a central member. The speed at which the projectile rotates is dependent on the flowrate of the fluid. The flow sensor is thereby configured to measure a flowrate of fluid based on rotation of the projectile about an axis. The projectile may take any suitable shape, such as a spherical shape, but may in practice may be any selected shape or design, such as described in U.S. Patent Application Publication 2023/0025158, "Spray Flow Sensing with Optical Signature Analysis," published July 12, 2023; or U.S. Provisional Patent Application 63/500,536, "Projectiles for Optical Flow Sensing, and Related Sensors and Methods," filed May 05, 2023.

The exemplary flowrate sensor may include an optical sensor configured to sense rotation of the projectile. For example, the optical sensor may be configured to measure a frequency at which the projectile rotates about the central member. The optical sensor may include an emitter (e.g., a light-emitted diode) configured to emit electromagnetic radiation (e.g., light) towards the projectile (e.g., through an optical sensor window) and an optical receiver or an optical sensor (e.g., a photodiode or similar) configured to measure the electromagnetic radiation (e.g., light) reflected from the projectile. The emitter may therefore emit electromagnetic radiation into the flow path of the projectile and the optical receiver may sense the reflected electromagnetic radiation. As the projectile passes the optical emitter, the light from the optical emitter is reflected by the projectile and is sensed by the optical receiver. The optical receiver may generate an output signal to the sensor circuitry indicating passes of the projectile. Flow data, such as a frequency at which the projectile passes the optical sensor (e.g., a pass count of the projectile), is generated and the flowrate can be determined based on the frequency.

In an alternative approach, the flowrate sensor may include a proximity sensor, such as a Hall-effect sensor, to sense passes of the projectile to generate the flow data, in a similar manner to that previously described. Where the proximity sensor comprises a Hall-effect sensor, the projectile of the flowrate sensor may be magnetic. The flowrate can similar be determined based on the flow data.

In some examples, the processing arrangement 340 is configured to control the output interface 410 to provide a user-perceptible output of the measured flowrate. This is particularly advantageous when the processing arrangement 340 controls the output interface 410 to provide a user-perceptible output of both the intended flowrate and the measured flowrate, as it provides an operator or user with a clear comparison between the intended and actual flowrates. This comparison may help identify potential issues or discrepancies in the system's performance, allowing for timely adjustments or maintenance.

In some examples, the processing arrangement 340 is configured to compare the predicted intended flowrate to the measured flowrate to produce difference information indicative of a difference between the predicted intended flowrate and the measured flowrate.

As a simple example, the difference information may simply be a numerical value representing the absolute difference between the predicted intended flowrate and the measured flowrate. In other examples, the difference information may be expressed as a percentage deviation of the predicted intended flowrate from the measured flowrate (e.g., expressible as a percentage or ratio) or vice versa.

The processing arrangement may be further configured to generate and output an alert output signal responsive to the difference information.

By way of example, the alert output signal may indicate whether or not a value in the difference information (e.g., an absolute difference or percentage/ratio) breaches a predetermined threshold. This provides useful information for identifying potential issues or discrepancies in the system's performance. The alert output signal may trigger various actions, such as notifying an operator (e.g., via the output interface 410) and/or adjusting system parameters, or initiating maintenance procedures.

As another example, the alert output signal may indicate different levels or categories of alerts based on the magnitude of the difference between the predicted intended flowrate and the measured flowrate. For instance, the alert output signal may indicate a "minor discrepancy" for small differences (e.g., differences below a certain threshold), a "moderate discrepancy" for larger differences, and a "critical discrepancy" for yet larger differences.

The processing arrangement is further configured to control a user interface (the output interface 410) to provide a user-perceptible output responsive to the alert output signal.

By way of example, the output interface 410 may comprise a screen or display, and the processing arrangement 340 may be configured to control the screen/display of the output interface 410 to provide a visual representation of the alert output signal. As another example, the output interface may comprise a speaker, and the processing arrangement 340 may be configured to control the speaker to provide an audio representation of the alert output signal.

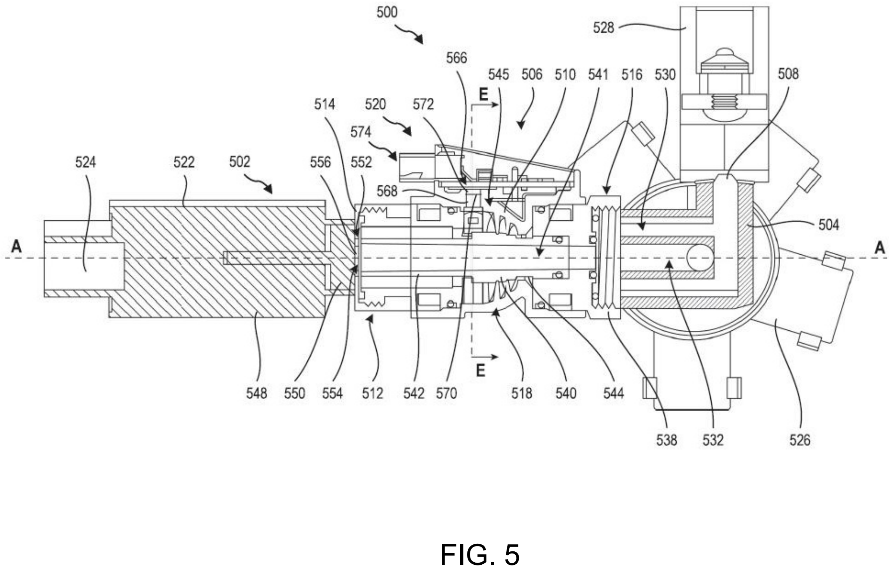

FIG. 5 is a simplified cross-sectional view of another example a pumping assembly 500 for improved contextual understanding. The skilled person will readily appreciate how the proposed system can be integrated with and/or into such a pumping assembly.

The pumping assembly 500 may be substantially similar to those described in International Patent Publication WO 2021/067739 A2, "Parameter Sensing for a Liquid Applicator," published April 8, 2021.

The pumping assembly 500 includes a valve 502, a body 504, and a sensor assembly 506 between the valve 502 and the body 504. An inlet port 508 fluidly couples the pumping assembly 500 to a fluid distribution system, such as the fluid distribution system 204 of the boom arm 202 (FIG. 2) or another fluid distribution system of any other form of agricultural implement. By way of non-limiting example, in some embodiments, the pumping assembly 500 may be coupled to the fluid outlet lines 208. The pumping assembly 500 may include a clamp 528 configured to operably couple the body 504 to the fluid distribution system.

The sensor assembly 506 includes a sensor housing 510 including a first end 512 operably coupled to the valve 502 at a connector 514, and a second end 516 operably coupled to the body 504. The sensor assembly 506 includes sensor circuitry configured to sense (e.g., measure) one or more parameters of the pumping assembly 500, such as at least one of a flowrate of the fluid through the pumping assembly 500 or a pressure of the fluid through the pumping assembly 500.

The sensor assembly 506 includes a sensor housing 510 including a first end 512 operably coupled to the valve 502 at a connector 514, and a second end 516 operably coupled to the body 504. The sensor assembly 506 includes sensor circuitry configured to sense (e.g., measure) one or more parameters of the pumping assembly 500, such as at least one of a flowrate of the fluid through the pumping assembly 500 or a pressure of the fluid through the pumping assembly 500.

For example, the sensor assembly 506 may include a flow sensor 518 configured to measure a flowrate of fluid through the pumping assembly 500 (e.g., through the valve 502). The sensor circuitry may be configured to provide the measured flowrate to the sensor monitoring system 130 (FIG. 1, FIG. 2). The sensor assembly 506 (e.g., the sensor circuitry) may be in operable communication with the sensor monitoring system 130 via a wired connection through port 574. The sensor circuitry is located within circuitry housing.

Fluid is configured to enter the pumping assembly 500 at the inlet port 508, travel through the sensor assembly 506 towards the valve 502, and travel from the valve 502 back through the sensor assembly 506 to the body 504 and to a turret 526, which may be operably coupled to a spray tip to deliver the fluid from the pumping assembly 500. The spray tip includes an orifice configured to atomize the fluid to generate the fluid spray from the pumping assembly 500. In some embodiments, the pumping assembly 500 includes multiple turrets 526, each turret 526 and associated spray tip including an orifice of a different configuration (e.g., size, shape) to generate different spray patterns.

The body 504 is fluidly coupled to the inlet port 508 and includes a first flow path 530 configured to receive the fluid from the inlet port 508. After traveling through the sensor assembly 506 to the valve 502 and returning from the valve 502 back through the sensor assembly 506, the fluid travels out of the body 504 via a second flow path 532. The second flow path 532 is configured to be in fluid communication with a desired one of the turrets 526. At least a portion of the first flow path 530 may be coaxial with the second flow path 532. In some embodiments, the first flow path 530 is disposed around the second flow path 532. During operation, only one of the turrets 526 is fluidly connected to an outlet path of the pumping assembly 500 at a given time. The turret 526 may be selected based on the desired flowrate and/or spray pattern to be emitted from the pumping assembly 500.

The sensor housing 510 may be operably coupled to the body 504 at a connector 538, which may comprise a threaded connection. The sensor assembly 506 includes a central member 540 defining a central passage 541 extending from an inlet end 542 and an outlet end 544. The outlet end 544 is in fluid communication with the second flow path 532 of the body 504. The sensor housing 510 defines a cavity therein defining a vortex flow path 545. The vortex flow path 545 is defined by inner walls 546 of the sensor housing 510 extending radially inward from the sensor housing 510 to the central member 540. The inner walls 546 may include, for example, splines.

The central member 540 may fluidly separate the vortex flow path 545 from the central passage 541. In some embodiments, upon entering the body 504, the fluid travels along the first flow path 530 to the sensor assembly 506 and into the vortex flow path 545 defined by the inner walls 546 of the sensor housing 510. Upon passing through the vortex flow path 545, the fluid passes by valve 502 and into the central passage 541 at the inlet end 542.

The valve 502 includes a valve body 522 coupled to the sensor assembly 506 at the second end 516. A port 524 is configured to receive a connector (e.g., an electrical connector) to provide power and/or communication to the valve 502. In some embodiments, the port 524 facilitates operable communication between the valve 502 and at least one of the control system 120 ((FIG. 1, FIG. 2).

In the illustrated embodiment, the valve 502 includes an actuator 548 configured to drive reciprocation of a valve member 550 within the valve body 522 responsive to instructions from the pumping assembly controller 122, 124. In some embodiments, the port 524 is in operable communication with the control system 130, which receives instructions from the control system 120, such as from the pumping assembly controller 122, 124.

The valve 502 may thereby include the actuator 548 and the valve member 550. The actuator 548 is configured to drive reciprocation of the valve member 550 to open and close the valve 502. In some embodiments, the actuator 548 comprises a solenoid. Upon actuation, the solenoid causes the valve member 550 to open or close a flow pathway between a valve inlet 552 and a valve outlet 554. The actuator 548 may be configured to cause the valve member 550 to reciprocate along axis A-A (e.g., left and right in the view of FIG. 5). The valve 502 may be controllable to vary the duty cycle and/or the frequency of reciprocation of the valve member 550 (also referred to as a "duty cycle frequency" or a "modulation frequency") to control one or more flow properties (e.g., the flowrate, the flow pattern) of the fluid from the pumping assembly 500. For example, the valve 502 may be in operable communication with the pumping assembly controller 122, 124 (FIG. 1, FIG. 2), to control the operation of the valve 502 to control the flowrate of the fluid through the pumping assembly 500.

In some embodiments, the valve 502 comprises a pulse width modulation (PWM) valve. The valve 502 may be configured to generate turbulence in the fluid flow as the valve 502 pulses between an open state and a closed state. For example, the inner walls 546 and the central member 540 may form helical flow paths defining the vortex flow path 545. The vortex flow path 545 create a cyclonic flow effect that induces rotation of a projectile about the axis A-A.

A seat 556 is positioned between the valve member 550 and the sensor assembly 506. When the valve 502 is in the open position, the actuator 548 may be retracted 17 and the valve member 550 may not contact the seat 556 such that the flow path between the valve inlet 552 and the valve outlet 554 is open. When the valve 502 is in the closed position, the actuator 548 causes the valve member 550 to contact the seat 556 and close the flow path between the valve inlet 552 and the valve outlet 554.

The valve 502 may be configured to reciprocate between an open state and a closed state according to a desired modulation frequency and duty cycle to control fluid flow through the outlet of the pumping assembly 500 (e.g., a nozzle operably coupled to the turret 526). The duty cycle of the valve 502 is controlled to control the flowrate of the fluid through the pumping assembly 500. Pulsing the valve 502 between open and closed positions affects the flowrate. In some embodiments, pulsing the valve 502 maintains the integrity and quality of the spray pattern generated by the pumping assembly 500 across a range of flowrates.

The sensor assembly 506 is configured to measure a pressure of the liquid in the valve 502, such as by measuring the pressure of the fluid in the sensor assembly 506. Thus, the sensor assembly 506 includes a pressure sensor 566 configured to measure a pressure of the fluid within the sensor assembly 506. The pressure sensor 566 may include a pressure port 568 at which a diaphragm 570 is located. The diaphragm 570 may be exposed to the fluid in the sensor assembly 506, such as the fluid within the vortex flow path 545. The pressure sensor 566 includes a sensor component 572, which may include a piezoresistive or a piezoelectric component. Interaction of the diaphragm 570 on the sensor component 572 may be indicative of and correspond to a pressure of the pressure in the sensor assembly 506.

The pressure sensor may form part of the proposed system.

In some embodiments, the pressure sensor 566 is in operable communication with the sensor monitoring system 130 (FIG. 1, FIG. 2). Although the pumping assembly 500 has been described and illustrated as including a particular type of pressure sensor 566, in other embodiments, the pressure sensor 566 comprises a different type of pressure sensor and/or is located at a different region of the pumping assembly 500.

In some examples, the sensor assembly comprises a flow sensor 518 for detecting a flowrate in the vortex flow path 545.

The flow sensor may comprise a projectile (not visible in FIG. 5) disposed within the sensor housing 510 within a portion of the vortex flow path 545. Responsive to exposure to fluid flow, the projectile rotates within the vortex flow path 545 about the central member 540

(e.g., between the central member 540 and inner surfaces of outer walls of the sensor housing 510). The speed at which the projectile rotates within the vortex flow path 545 is dependent on the flowrate of fluid through the sensor housing 510. The flow sensor 518 is configured to measure a flowrate of fluid within the sensor assembly 506 based on rotation of the projectile about axis A-A (e.g., about the central member 540). Examples of projectiles have been previously described.

The flow sensor 518 may include an optical sensor configured to sense rotation of the projectile. For example, the optical sensor may be configured to measure a frequency at which the projectile rotates about the central member 540 within the vortex flow path 545. The optical sensor may include an emitter configured to emit electromagnetic radiation (e.g., light) towards the projectile (e.g., through an optical sensor window), and an optical receiver configured to measure the electromagnetic radiation (e.g., light) reflected from the projectile. The emitter may comprise a light-emitting diode (LED) and the optical receiver may comprise a photodiode. The emitter may emit electromagnetic radiation into the flow path of the projectile and the optical receiver may sense the reflected electromagnetic radiation.

As the projectile passes the optical emitter, the light from the optical emitter is reflected by the projectile and is sensed by the optical receiver. The optical receiver 56 may generate an output signal to the sensor circuitry indicating passes of the projectile. Flow data, such as a frequency at which the projectile passes the optical sensor (e.g., a pass count of the projectile ), is generated and the flowrate can be determined based on the frequency. In some embodiments, the optical sensor includes a proximity sensor. In some embodiments, the flow sensor 518 can include a magnetic projectile a proximity sensor, such as a Hall-effect sensor, to sense passes of the ball.

While the pumping assembly 500 has been described and illustrated as having a particular configuration and orientation, the disclosure is not so limited. In other embodiments, the pumping assembly 500 may be substantially similar to other spray nozzles (e.g., applicators 18') described in International Patent Publication WO 2021/067739 A2, or to the nozzles described in U.S. Patent Application Publication 2022/0264865.

The port 574 of the sensor assembly 506 is configured to receive a connector (e.g., an electrical connector) to provide power and/or communication to the sensor assembly 506, such as from the sensor monitoring system 130 (FIG. 1, FIG. 2). The port 574 may facilitate electrical communication between the sensor assembly 506 (e.g., between each of the flow sensor 518 and the pressure sensor 566) and the sensor monitoring system 130.

In use and operation, responsive to opening and closing of the valve 502, such as by actuation of the actuator 548 to cause the valve member 550 to reciprocate, fluid may flow from the inlet port 508, through the first flow path 530 of the body 504 to the sensor housing 510; through the vortex flow path 545 defined in the sensor housing 510 to the valve inlet 552; from the valve inlet 552 through the valve 502 to the valve outlet 554; from the valve outlet 554, through the central passage 541 of the central member 540 of the sensor housing 510 to the second flow path 532 of the body 504; and from the second flow path 532 out one of the turrets 526 and associated spray tips. As the fluid passes through the second housing 510, one or more flow properties of the fluid may be measured by the sensor assembly 506, such as the pressure of the fluid in the sensor housing 510 and optionally the flowrate of the fluid through the sensor housing 510.

As described above, the sensor assembly 506 may be in operable communication with the sensor monitoring system 130 (FIG. 1, FIG. 2) (e.g., via the port 574), and the valve 502 may be in operable communication with the pumping assembly controller 122, 124 (FIG. 1, FIG. 2) (e.g., via the port 524).

The sensor assembly 506 may be configured to measure the one or more properties of the fluid (e.g., the flowrate, the pressure) within the sensor housing 510 and the sensor monitoring system 130 may be configured to receive the signals from the sensor assembly 506.

In some embodiments, the control system 120, such as the pumping assembly controller 122, 124, may be configured to provide operating instructions to the fluid distribution system 204(FIG. 2). The instructions may include at least one of a desired flowrate of fluid to be provided to the nozzle assemblies 500, or operating instructions for a pump or valve associated with the fluid distribution system 204to adjust the flowrate of the fluid provided to the nozzle assemblies 500.

In some embodiments, the instructions are provided from an operator of the crop sprayer 102 or other agricultural vehicle, such as via the I/O device 122 of the control system 120.

In some embodiments, the sensor monitoring system 130 provides an indication of the flowrate of fluid through each of the nozzle assemblies 500 to the I/O device 134 (e.g., to a graphical user interface (GUI) of the I/O device 134) and the operator of the crop sprayer 102 or agricultural vehicle may provide instructions to the pumping assembly controller 122, 124 via the I/O device 122 of the control system 120 to adjust a flowrate of the fluid from the product tank 110 (FIG. 1) to the fluid distribution systems 204.

In some embodiments, the valve 502 receives, from the pumping assembly controller 122, 124, instructions indicative of a desired flowrate through the pumping assembly 500. Responsive to receiving the instructions, the valve 502 adjusts the flowrate to provide the desired flowrate through the pumping assembly 500. Based on a desired flowrate, the pumping assembly controller 122, 124 provides operating instructions to the valve 502 to open and close at a particular duty cycle and modulation frequency.

Although the valve 502 has been described and illustrated as being associated with the pumping assembly 500 for use in a crop sprayer 102, 300 (e.g., the sprayer pumping assembly) or the agricultural implement for use with the row units, the disclosure is not so limited. In some embodiments, the pumping assembly 500 and/or the valve 502 are configured to provide flow of a gaseous material (e.g., ammonia) therethrough.

The skilled person will appreciate that there is also proposed a pumping assembly comprising a pumping arrangement and a proposed system.

There is also proposed an agricultural vehicle comprising one or more pumping assemblies and, for each pumping assembly, (an instance of) the proposed system. Thus, the agricultural vehicle may comprise a plurality of pumping assemblies, each responsible for dispensing fluid in a specific area.

In agricultural vehicles comprising a plurality of pumping assemblies, the vehicle will comprise a pressure sensor and (at least a portion of a) duty cycle measurement system for each pumping assembly, such as the duty cycle sensor previously disclosed. This arrangement allows for individualized monitoring and prediction of intended flowrate for each pumping assembly on the vehicle.

While each pumping assembly has its own sensors, the agricultural vehicle may comprise a shared input interface and processing arrangement to manage the data from all pumping assemblies. This allows for efficient data processing and system management across all pumping assemblies on the vehicle.

In some examples, the agricultural vehicle is a crop sprayer, and each pumping assembly is configured for spraying crops.

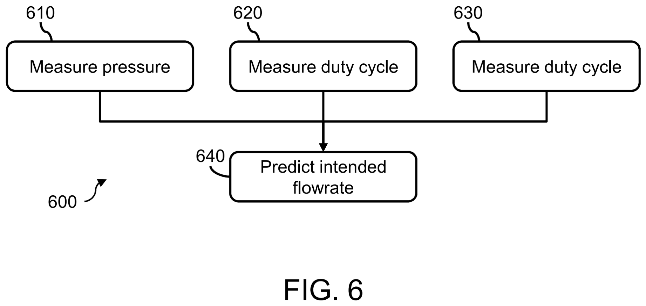

FIG. 6 is a simplified flow-chart illustrating a computer-implemented method 600 for predicting an intended flowrate of a flow of fluid pumped by a pumping arrangement through an orifice.

The computer-implemented method 600 may be performed by the system previously disclosed.

The computer-implemented method 600 comprises measuring 610, using a pressure sensor, positioned between the pumping arrangement and the orifice, a pressure applied by of the flow of fluid to the pressure sensor to produce a measured pressure.

The computer-implemented method 600 also comprises measuring, using a duty cycle measurement system, a duty cycle of the pumping arrangement when producing the flow of fluid to produce a measured duty cycle.

The computer-implemented method 600 also comprises receiving 630, via an input interface, an orifice size indicator indicating a size of the orifice.

The computer-implemented method 600 also comprises processing 640 the measured pressure, the measured duty cycle and the orifice size indicator to predict the intended flowrate of the flow of fluid.

In some examples, act 640 comprises processing the measured pressure and the orifice size indicator to produce an initial estimate of flowrate through the orifice; and processing the initial estimate of flowrate and the measured duty cycle to predict the intended flowrate of the flow of fluid.

It will be understood that disclosed methods are preferably computer-implemented methods. As such, there is also proposed the concept of a computer program comprising code means for implementing any described method when said program is run on a processing arrangement. Thus, different portions, lines or blocks of code of a computer program according to an embodiment may be executed by a processing arrangement to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Proposed embodiments make use of a processing arrangement. The processing arrangement may comprise at least one processor and at least one memory carrying instructions that, when executed, cause the at least one processor to perform at least some of the desired functionality of the processing arrangement.

Each processor may be embodied as, for instance, one or more pieces of general-purpose and/or fixed function circuitry, such as a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel).

The memory may comprise any suitable non-volatile memory, such as a read-only memory (ROM), erasable programmable read-only memory (EPROM), electrically erasable programmable read-only memory (EEPROM), flash memory, or any combination thereof. The memory may also or otherwise comprise volatile memory, such as random access memory (RAM), static random access memory (SRAM), dynamic random access memory (DRAM), or any combination thereof.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

**Claims**

1. A system for predicting an intended flowrate of a flow of fluid pumped by a pumping arrangement through an orifice, the system comprising:

a pressure sensor configured to measure a pressure of the flow of fluid to produce a measured pressure;
a duty cycle measurement system configured to measure a duty cycle of the pumping arrangement, when producing the flow of fluid, to produce a measured duty cycle;
an input interface configured to receive an orifice size indicator, indicating a size of the orifice; and
a processing arrangement configured to process the measured pressure, the measured duty cycle and the orifice size indicator to predict the intended flowrate of the flow of fluid.

2. The system of claim 1, wherein the processing arrangement is configured to:

process the measured pressure and the orifice size indicator to produce an initial estimate of flowrate through the orifice; and
process the initial estimate of flowrate and the measured duty cycle to predict the intended flowrate of the flow of fluid.

3. The system of claim 2, wherein the measured duty cycle is a value between 0 and 1, and the processing arrangement is configured to multiply the initial estimate of flowrate by the measured duty cycle to predict the intended flowrate of the flow of fluid.

4. The system of claim 2 or 3, wherein the orifice size indicator is an area of the orifice.

5. The system of any one of claims 1 to 4, wherein the orifice size indicator is user-defined.

6. The system of claim 5, wherein the input interface comprises a user input interface configured to produce the orifice size indicator responsive to an interaction with the user input interface by a user.

7. The system of any one of claims 1 to 6, wherein the duty cycle measurement system comprises a pressure sensing arrangement configured to measure pressure variations, associated with operation of the pumping arrangement, in the flow of fluid to measure the duty cycle.

8. The system of any one of claims 1 to 7, wherein the duty cycle measurement system comprises a magnetometer configured to measure magnetic field variations associated with an operation of the pumping arrangement to measure the duty cycle.

9. The system of any one of claims 1 to 8, wherein the duty cycle measurement system comprises an accelerometer configured to measure vibrations and/or motion associated with an operation of the pumping arrangement to measure the duty cycle.

10. The system of any one of claims 1 to 9, further comprising:

a flowrate system configured to measure a flowrate of the fluid through the orifice, to produce a measured flowrate,
wherein the processing arrangement is configured to compare the predicted intended flowrate to the measured flowrate to produce difference information indicative of a difference between the predicted intended flowrate and the measured flowrate.

11. The system of claim 10, wherein the processing arrangement is configured to generate and output an alert output signal responsive to the difference information.

12. The system of claim 11, wherein the processing arrangement is further configured to control a user interface to provide a user-perceptible output responsive to the alert output signal.

13. The system of any one of claims 1 to 12, wherein the orifice is a nozzle.

14. A computer-implemented method for predicting an intended flowrate of a flow of fluid pumped by a pumping arrangement through an orifice, the computer-implemented method comprising:

measuring, using a pressure sensor, a pressure of the flow of fluid to produce a measured pressure;
measuring, using a duty cycle measurement system, a duty cycle of the pumping arrangement when producing the flow of fluid to produce a measured duty cycle;

receiving, via an input interface, an orifice size indicator indicating a size of the orifice; and

processing the measured pressure, the measured duty cycle and the orifice size indicator to predict the intended flowrate of the flow of fluid.

15. The computer-implemented method of claim 14, comprising:

processing the measured pressure and the orifice size indicator to produce an initial estimate of flowrate through the orifice; and

processing the initial estimate of flowrate and the measured duty cycle to predict the intended flowrate of the flow of fluid.

FIG. 1

FIG. 2

FIG. 3

FIG. 4

FIG. 5

610

Measure pressure

620

Measure duty cycle

630

Measure duty cycle

640

Predict intended
flowrate

600

FIG. 6

Europäisches
Patentamt
European
Patent Office
Office européen
des brevets

# EUROPEAN SEARCH REPORT

**Application Number**

EP 25 22 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 040 357 B2 (CAPSTAN AG SYSTEMS INC [US]) 22 June 2021 (2021-06-22) | 1-5, 10-15 | INV. F04B13/00 F04B49/06 |
| A | * column 7, line 22 - column 9, line 67 * ----- | 7-9 | |
| A | US 10 827 740 B2 (DEERE & CO [US]) 10 November 2020 (2020-11-10) * column 7 - column 8 * * column 10, line 11 * ----- | 1-15 | |
| A | US 5 134 961 A (GILES DURHAM K [US] ET AL) 4 August 1992 (1992-08-04) * the whole document * ----- | 1-15 | |
| A | WO 2021/067739 A2 (INTELLIGENT AGRICULTURAL SOLUTIONS LLC [US]) 8 April 2021 (2021-04-08) * the whole document * ----- | 1-15 | |

**TECHNICAL FIELDS SEARCHED (IPC)**

F04B

The present search report has been drawn up for all claims

| Place of search | Date of completion of the search | Examiner |
|---|---|---|
| Munich | 24 April 2026 | Ziegler, Hans-Jürgen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 1807

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | | Publication date | Patent family member(s) | | Publication date |
|---|---|---|---|---|---|
| US 11040357 | B2 | 22-06-2021 | NONE | | |
| US 10827740 | B2 | 10-11-2020 | AU | 2019210557 A1 | 20-02-2020 |
| | | | BR | 102019016101 A2 | 27-02-2020 |
| | | | BR | 102019016105 A2 | 03-03-2020 |
| | | | CA | 3050804 A1 | 03-02-2020 |
| | | | EP | 3603368 A1 | 05-02-2020 |
| | | | EP | 3603369 A1 | 05-02-2020 |
| | | | US | 2020037598 A1 | 06-02-2020 |
| US 5134961 | A | 04-08-1992 | NONE | | |
| WO 2021067739 | A2 | 08-04-2021 | AU | 2020358089 A1 | 14-04-2022 |
| | | | BR | 112022005501 A2 | 21-06-2022 |
| | | | CA | 3154863 A1 | 08-04-2021 |
| | | | EP | 4037482 A2 | 10-08-2022 |
| | | | US | 2024099288 A1 | 28-03-2024 |
| | | | WO | 2021067739 A2 | 08-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220264865 A
- WO 2021067739 A2
- US 20230025158
- US 63500536
- US 20220264865

### Non-patent literature cited in the description

- **READER-HARRIS, M.J** ; **SATTARY, J.A**. The orifice plate discharge coefficient equation - the equation for ISO 5167-1. In Proc. of 14th North Sea Flow Measurement Workshop, Peebles, Scotland, East Kilbride, Glasgow. *National Engineering Laboratory*, October 1996, 24
- **READER-HARRIS, M.J**. The equation for the expansibility factor for orifice plates. *In Proc. of FLOMEKO*, June 1998, vol. 98, 209-214